# EUROPÄISCHE PATENTSCHRIFT

(11) **EP 3 454 650 B1**
(45) Veröffentlichungstag und Bekanntmachung des Hinweises auf die Patenterteilung: **11.11.2020**
(21) Anmeldenummer: 17728778.6
(22) Anmeldetag: 11.05.2017
(51) Int. Cl.: A01M 31/00

(54) **VERFAHREN ZUM BETRIEB EINES ROBOTERS ZUR UNGEZIEFERBEKÄMPFUNG**
METHOD FOR OPERATING A ROBOT FOR CONTROLLING PESTS
PROCÉDÉ PERMETTANT DE FAIRE FONCTIONNER UN ROBOT UTILISÉ POUR LA LUTTE CONTRE LES PARASITES

(30) Priorität: 13.05.2016 DE 102016108936
(43) Veröffentlichungstag der Anmeldung: 20.03.2019
(73) Patentinhaber: Universität Kassel, 34125 Kassel (DE)
(72) Erfinder: HENSEL, Oliver, 37215 Witzenhausen (DE); HÖING, Christian, 37213 Witzenhausen (DE)
(74) Vertreter: Schneider, Peter Christian
(86) Internationale Anmeldenummer: PCT/EP2017/061388
(87) Internationale Veröffentlichungsnummer: WO 2017/194701

(56) Entgegenhaltungen:
- WO-A1-2015/154148
- US-A1- 2011 054 691
- GREENMAN J ET AL: "Towards robot autonomy in the natural world: a robot in predator's clothing", MECHATRON, PERGAMON PRESS, OXFORD, GB, Bd. 13, Nr. 3, 1. April 2003 (2003-04-01), Seiten 195-228, XP004398644, ISSN: 0957-4158, DOI: 10.1016/S0957-4158(01)00045-9

## Beschreibung

### Gebiet der Erfindung

Die Erfindung betrifft ein Verfahren zum Betrieb eines Roboters zur Ungezieferbekämpfung in einem vorgegebenen Bekämpfungsgebiet, wobei der Roboter
- Bewegungsmittel, mittels derer er in der Lage ist, sich im Bekämpfungsgebiet zu bewegen,
- Detektionssmittel zum wenigstens mittelbaren Detektieren von zu bekämpfendem Zielungeziefer,
- Bekämpfungsmittel zum Bekämpfen identifizierten Zielungeziefers,
- Ortungsmittel zur Ortung seiner jeweils aktuellen Position im Bekämpfungsgebiet und
- Steuermittel, die eingerichtet sind, die Bewegungsmittel, die Detektionsmittel die Bekämpfungsmittel und die Ortungsmittel zu steuern,
aufweist,
und wobei der Roboter von seinen Steuermitteln angesteuert wird, sich nach vorgegebenen Bewegungsregeln im Bekämpfungsgebiet zu bewegen und auf seinem Weg durch das Bekämpfungsgebiet wenigstens mittelbar angetroffenes Zielungeziefer zu detektieren und unverzüglich zu bekämpfen.

### Stand der Technik

Ein derartiges Verfahren ist bekannt aus Kelly, I. et al.: "SlugBot: A Robotic Predator in the Natural World" Proc. 5th International Symposium on Artificial Life and Robotics, Oita, Japan, January 2000, pp. 470-475*.* Dieser Artikel beschreibt einen autonom agierenden Agrarroboter, der nach vorgegebenen, in dem Artikel jedoch nicht genannten Regeln ein landwirtschaftlich genutztes Feld, das Bekämpfungsgebiet, abfährt und auf seinem Weg angetroffene Schnecken mittels bildgebender Spektralanalyse detektiert. Detektierte Schnecken werden mittels eines Greifarms aufgegriffen und in einen vom Roboter getragenen Tank verbracht. In bedarfsabhängig bestimmten Abständen wird der Tank zu einem am Feldrand positionierten Fermenter gebracht und dort ausgeleert. Im Fermenter werden die gefangenen Schnecken unter Zuhilfenahme von Bakterien fermentiert und das entstehende Biogas wird in elektrische Energie umgewandelt und diese gespeichert. Aus den elektrischen Speicher werden roboterseitig installierte Antriebsspeicher geladen, die der Speisung des elektrischen Radantriebs des Roboters dienen. Zur "Jagdstrategie" des Roboters beschreibt der Artikel, dass der Roboter zu Beginn des Verfahrens in die Mitte des Bekämpfungsgebietes steuert und dort seinen Greifarm samt Detektor spiralförmig bewegt, um Schnecken zu detektieren und aufzugreifen. Sobald der mittels des Greifarms erzielbare, maximale Spiraldurchmesser erreicht ist, bewegt sich der Roboter zu einer neuen Jagdposition und wiederholt die vorgenannte Bewegung. Nach welchen Kriterien die neue Jagdposition ausgewählt wird, offenbart der Artikel nicht.

Derselbe Roboter wird auch in dem Artikel Greenman, J. et al.: "Towards robot autonomy in natural world: a robot in predator's clothing", MECHATRONICS, Pergamon Press, Oxford, GB, Bd. 16, Nr.3, 1. April 2003, S.195-228 beschrieben, wobei er in Ergänzung des vorgenannten Artikels erwähnt, dass bei der Auswahl der neuen Jagdposition Erfahrungen bzgl. früherer Erfolgsraten in bestimmten Bereichen des Bekämpfungsgebietes als eines von mehreren möglichen Auswahlkriterien - allerdings in nicht näher spezifizierter Weise - herangezogen werden können.

Gerade die Auswahl der Jagdpositionen ist jedoch für die Effizienz des Robotereinsatzes von entscheidender Bedeutung. So muss es das Ziel jeder Roboter-basierten Ungezieferbekämpfung sein, den durch das Ungeziefer verursachten Schaden an den im Bekämpfungsgebiet angebauten Pflanzen ebenso zu minimieren, wie den durch die Bewegung des Roboters selbst an den Pflanzen verursachten Schaden. Eine vollständige Vernichtung jeglichen Ungeziefers ist jedoch in der Regel nicht nötig.

Aus der US 8,381,501 B2 ist ein Agrarroboter-System bekannt, bei dem zunächst ein Scouting-Roboter ein agrarisch genutztes Feld unter Registrierung jeder einzelnen Pflanze und ihres jeweiligen Zustandes, einschließlich ihres Schädlings- oder Krankheitsbefallszustandes, digital registriert. Ein Prozessor mit Rückgriffsmöglichkeit auf Datenbanken erstellt auf dieser Basis einen Behandlungsplan, der dann von einem Arbeitsroboter abgearbeitet wird. Scouting- und Arbeitsroboter sowie Prozessor können in ein und derselben mobilen Vorrichtung implementiert oder auf unterschiedliche (mobile und/oder stationäre) Einheiten verteilt sein. In jedem Fall ist ein wenigstens zweimaliges, systematisches Abfahren des gesamten Feldes erforderlich, was einerseits die Effizienz des Systems begrenzt und andererseits keine Minimierung des durch den oder die Roboter verursachten Schadens zulässt. Dies resultiert aus der primär angestrebten Nutzung des Systems als Ernte- und Beschnittsystem, das notwendig eine systematische Abarbeitung des Gesamtfeldes auf Einzelpflanzenbasis erfordert.

Aus der CA 2 748 118 A1 ist ein ähnliches System bekannt, bei dem jedoch der Scouting-Roboter, der in jedem Fall mit dem Arbeitsroboter identisch ist, bereits während des Scouting-Prozesses, dessen Zwischenergebnisse kontinuierlich ausgewertet werden, Arbeitsanweisungen zur Schädlingsbekämpfung erhält. Diese führt er unverzüglich aus, sofern er die notwenigen Ressourcen an Bord hat. Anderenfalls fährt er zu einer Versorgungsstation, um die erforderlichen Ressourcen zu laden. Auch hier steht die systematische Abarbeitung des gesamten Bekämpfungsgebietes im Vordergrund. Der damit verbundene Nachteil der evtl. Pflanzenschädigung durch (unter reinen Schädlingsbekämpfungs-Aspekten) überflüssigen Fahrten wird durch die zusätzlichen Versorgungsfahrten noch gesteigert.

Die WO 2015/154148 A1 offenbart ein Verfahren im Prinzip gleichartiges Verfahren, das jedoch an die Besonderheiten der Ungezieferbekämpfung in großen und schwer zugänglichen Gebieten angepasst ist. Anstelle eines fahrbaren Roboters wird das Bekämpfungsgebiet zunächst mit einer Drohne überflogen, um Hinweise auf das Vorhandensein von Ungeziefer zu sammeln bzw. solche Hinweise mit den räumlichen Koordinaten der Detektionsstellen zu verknüpfen. Diese Daten werden sodann an eine Basisstation übermittelt, die daraus einen Verteilungsplan für Giftköder errechnet. Im Anschluss werden im Rahmen eines zweiten Überflugs Giftköder an den im Verteilungsplan bestimmten Positionen platziert. Im Hinblick auf den zwingend notwendigen, mehrfachen, systematischen Überflug über das Bekämpfungsgebiet ist dieses Verfahren wenig effizient.

Aus der US 2013/0204581 A1 ist ein System zur Ermittlung einer räumlichen und qualitativen Schädlingsverteilung in einem agrarisch genutzten Gebiet bekannt. Hierzu wird eine Mehrzahl von mit Ködern und Sensoren ausgestatteten Fallen in dem Gebiet verteilt. Mittels der Köder werden lokal vorhandene Schädlinge angelockt und mittels der Sensoren nach ihrer biologischen Art spezifiziert. GPS-Einheiten an den einzelnen Fallen erlauben eine einfache Ortung der typischerweise von Hand nach lokalen Kriterien verteilten Fallen. Die Fallen sind mit einem Server verbunden, der aus ihren Einzeldaten eine genaue Karte der Befallsart und -stärke des Gebietes ermittelt, sodass auf dieser Basis optimierte Bekämpfungspläne ausgearbeitet werden können. Konkrete Bekämpfungsmaßnahmen, insbesondere mit mobilen Bekämpfungseinheiten, sind in der genannten Druckschrift nicht offenbart.

Die US 2011/0054691 A1 offenbart ein auf einem mobilen Roboter basierendes Vogel-Überwachungssystem, dessen Ergebnisse in ein Vergrämungsprogramm gegen Vögel zum Schutz von Luftfahrzeugen in Flughafennähe einfließen.

### Aufgabenstellung

Es ist die Aufgabe der vorliegenden Erfindung, ein gattungsgemäßes Betriebsverfahren für einen landwirtschaftlichen Ungezieferbekämpfungsroboter möglichst effizient zu gestalten.

### Darlegung der Erfindung

Diese Aufgabe wird in Verbindung mit den Merkmalen des Oberbegriffs von Anspruch 1 dadurch gelöst, dass die Steuermittel jeden Ort, an dem eine tatsächliche Bekämpfungsmaßnahme stattgefunden hat, als Bekämpfungsort in einem Datenspeicher speichern, daraus kontinuierlich Bereiche des Bekämpfungsgebietes mit erhöhter Bekämpfungsortdichte als Hotspots identifizieren und spätestens nach Ablauf einer Initialisierungsphase ausschließlich die identifizierten Hotspots als Bewegungsziele der nach den vorgegebenen Bewegungsregeln durchzuführenden Bewegung des Roboters im Bekämpfungsgebiet vorgeben.

Bevorzugte Ausführungsformen der Erfindung sind Gegenstand der abhängigen Patentansprüche.

Es ist die Grundidee der vorliegenden Erfindung, den Roboter bzw. seine Steuermittel in sich ständig aktualisierender Weise Zentren besonders starken Ungezieferbefalls ermitteln zu lassen und die Bekämpfung auf diese Zentren zu konzentrieren. Hierzu werden solche Zentren als sog. Hotspots identifiziert, wobei von der Dichte der Orten, an denen eine tatsächliche Bekämpfungsmaßnahme stattgefunden hat, auf die Dichte an Zielungeziefer in dem entsprechenden Gebiet geschlossen wird. Gebiete außerhalb der Hotspots werden bei der Berechnung der Bewegungsstrategie außer Acht gelassen. Bei der praktischen Bekämpfung werden sie jedoch dadurch mit berücksichtigt, dass der Roboter bei seiner Bewegung von einem Hotspot zum nächsten auch diese bislang unberücksichtigten Gebiete passiert und währenddessen die Ungezieferdetektion und -bekämpfung nicht aussetzt. Ebenso wird die Speicherung der Bekämpfungsorte und die Hotspot-Identifizierung während der Bewegung von einem identifizierten Hotspot zum nächsten nicht ausgesetzt. Folglich können auch bislang nicht als Hotspots identifizierte Gebiete erhöhten Ungezieferbefalls, obgleich sie bei der Berechnung der Bewegungsstrategie bislang nicht berücksichtigt worden waren, als Hotspots identifiziert und in die weitere Bewegungsstrategie einbezogen werden. Umgekehrt können auf diese Weise auch als Hotspots identifizierte Gebiete, die, insbesondere aufgrund erfolgreicher Ungezieferbekämpfung, keinen erhöhten Ungezieferbefall mehr aufweisen, aus der Liste von Hotspots herausfallen und bei der künftigen Bewegungsstrategie unberücksichtigt bleiben. Es hat sich herausgestellt, dass hierdurch in der Praxis alle Gebiete erhöhten Ungezieferbefalls gefunden und Ungeziefer hier verstärkt bekämpft wird, während Gebiete, in denen tatsächlich kein schadrelevanter Ungezieferbefall vorliegt, nicht an- oder nur schnell durchfahren werden, sodass der Roboter hier keine Zeit und Energie verschwendet, seine Ressourcen auf die gefährdeten Bereiche konzentriert und seine Bewegungen im Bekämpfungsgebiet insgesamt und dadurch den selbst verursachten Schaden an Pflanzen minimiert.

Der Fachmann wird verstehen, dass die erläuterte Strategie des Anfahrens nur der identifizierten Hotspots selbstverständlich die vorherige Identifizierung mehrerer Hotspots voraussetzt. Es kann daher, wie weiter unter noch näher erläutert werden soll, sinnvoll sein, dem erfindungsgemäßen Verfahren eine Initialisierungsphase vorzuschalten, während welcher der Roboter nach einer anderen Bewegungsstrategie arbeitet um die für die erfindungsgemäße Bewegungsstrategie erforderlichen Anfangs-Hotspots zu identifizieren. Der Fachmann wird ebenfalls verstehen, dass die konkrete Art der Bewegungsmittel für die vorliegende Erfindung nicht von Belang ist. Denkbar sind insbesondere Rad- oder, bevorzugt, Raupenantriebe. Grundsätzlich denkbar ist jedoch auch der Einsatz von Schreitwerken. Der hier der Einfachheit halber verwendete Begriff des "Anfahrens" von Bewegungszielen ist daher allgemein und unabhängig von der konkreten Antriebsart zu verstehen.

Sind eine Mehrzahl von Hotspots, die der Roboter erfindungsgemäß anzufahren hat, identifiziert, bedarf es einer Strategie zur Bestimmung einer Reihenfolge des Anfahrens der Hotspots. Bei einer besonders bevorzugten Ausführungsform ist vorgesehen, dass als jeweils nächstes anzufahrendes Bewegungsziel der am längsten nicht angefahrene Hotspot vorgegeben wird. Auf diese Weise wird die sich ständig aktualisierende Liste von Hotspots turnusmäßig abgearbeitet und einer Erholung der Ungezieferpopulation nach einer einmaligen Bekämpfungsmaßnahme entgegengewirkt.

Bezüglich der Bewegungsregeln, nach denen sich der Roboter von Hotspot zu Hotspot bewegt, sind unterschiedliche Varianten denkbar. Bei einer besonders vorteilhaften Ausführungsform ist vorgesehen, dass die vorgegebenen Bewegungsregeln jeweils eine geradlinige Fortsetzung der aktuellen Bewegung bis zum Erreichen eines Randes des Bekämpfungsgebietes und ein dortiges Umschwenken auf eine neue, geradlinige und das nächste vorgegebene Bewegungsziel kreuzende Bewegung vorschreiben. Die Anwendung dieser Bewegungsregeln ist insbesondere bei einem raupengetriebenen Roboter von Vorteil. Der Raupenantrieb ist bei geradliniger Bewegung äußerst pflanzenschonend, weshalb er die bevorzugte Antriebsart ist. Bei Wendungen reißt ein Raupenantrieb jedoch mit der inneren, stehenden oder rückwärts laufenden Kette die Oberfläche des Feldes stark auf und schädigt dabei die Pflanzen. Solche Wendungen werden bei Anwendung der bevorzugten Bewegungsregeln vermieden. Vielmehr werden sie in Bereiche verlagert, in denen häufig sogenannte Vorgewende angelegt sind und in denen keine zu schonenden Pflanzen existieren. Ein weiterer Vorteil dieser Art von Bewegungsregeln ist es, dass große Bereiche des Bekämpfungsgebietes durchfahren werden, sodass die Wahrscheinlichkeit, bislang unentdeckte Gebiete erhöhten Ungezieferbesatzes als Hotspots identifizieren zu können, wächst. Möglich ist aber auch, die Bewegungsregeln so vorzugeben, dass der Roboter das jeweils nächste Bewegungsziel auf dem kürzestmöglichen Weg anfährt oder sich ihm auf einer Kurven- oder Spiralbahn nähert. Diese Varianten sind insbesondere in Verbindung mit einem Radantrieb oder einem Schreitwerk vorteilhaft und erhöhen die Chance, weitere Gebiete erhöhten Ungezieferbefalls aufzufinden.

Auch für die bereits erwähnte Initialisierungsphase können ähnliche, wenngleich ggf. leicht abgewandelte Bewegungsregeln angewendet werden. Hier ist bevorzugt vorgesehen, dass während der Initialisierungsphase die vorgegebenen Bewegungsregeln jeweils eine geradlinige Fortsetzung der aktuellen Bewegung bis zum Erreichen eines Randes des Bekämpfungsgebietes und ein dortiges Umschwenken auf eine neue, zufällig ausgewählte, geradlinige Bewegung vorschreiben. An die Stelle des gezielten Umschwenkens am Feldrand tritt während der Initialisierungsphase ein Umschwenken in eine zufällige Richtung. Hierzu kann beispielsweise mittels eines Zufallsgenerators in den Steuermitteln ein zufälliger Schwenkwinkel ermittelt werden. Dies führt in der Initialisierungsphase zu einem - quasi - chaotischen Abfahren des Feldes, was, sofern keine Vorinformationen über Gebiete erhöhten Ungezieferbefalls vorliegen, die effizienteste Methode zum Auffinden solcher Gebiete und zur Identifizierung von Hotspots ist. Liegen hingegen Vorinformationen über das Bekämpfungsgebiet vor, beispielsweise Informationen über Hotspots einer vorjährigen Bekämpfungskampagne, geologische oder geografische Informationen, Informationen aus Precision-Farming-Daten o.ä., so lassen sich konkrete, bereits in der Initialisierungsphase vorläufige Bewegungsziele definieren, die der Roboter nach den oben erläuterten, deterministischen Bewegungsregeln anfahren kann.

Die Initialisierungsphase wird bevorzugt abgeschlossen, sobald eine Mehrzahl von als vorläufige Bewegungsziele vorgegebenen Bewegungszielen angefahren und eine vorgegebene Anzahl von Hotspots identifiziert wurde. In Fällen ohne jegliche Vorinformation über das Bekämpfungsgebiet kann die Anzahl vorläufiger Bewegungsziele auch Null sein. In diesem Fall würde die Initialisierungsphase enden, sobald eine vorbestimmte Mehrzahl von Hotspots, z.B. zwei oder drei Hotspots, angefahren wurde. In diesem Fall werden während der Initialisierungsphase bevorzugt die oben erläuterten, chaotischen Bewegungsregeln verwendet. Liegen hingegen Vorinformationen und somit eine positive Anzahl von vorläufigen Bewegungszielen vor, kann die Initialisierungsphase abgeschlossen werden, wenn der sich nach den oben erläuterten, deterministischen Bewegungsregeln bewegende Roboter alle vorläufigen Bewegungsziele angefahren und dabei die für die erfindungsgemäße Bewegungsstrategie erforderlichen Anfangs-Hotspots identifiziert hat.

Auch für die Regeln, nach denen ein Gebiet erhöhten Ungezieferbefalls als Hotspot identifiziert wird, sind unterschiedliche Varianten denkbar. Wie oben erläutert, wird in jedem Fall davon ausgegangen, dass die Dichte der tatsächlichen Bekämpfungsorte repräsentativ für den lokalen Ungezieferbefall ist. Bei einer ersten, bevorzugten Variante des Verfahrens ist vorgesehen, dass als ein Hotspot ein solcher Bereich des Bekämpfungsgebietes identifiziert wird, in dem eine oberhalb eines Anzahl-Grenzwertes liegende Mehrzahl von Abständen zwischen je zwei benachbarten Bekämpfungsorten unterhalb eines vorgegebenen Abstand-Grenzwertes liegt. Diese Variante ist allerdings sehr rechenaufwendig. So werden ständig die Abstände sämtlicher gespeicherter Bekämpfungsorte voneinander berechnet. Liegen in einem bestimmten Bereich des Bekämpfungsgebietes Bekämpfungsorte sehr nah beieinander, ist dies ein erstes Indiz für einen erhöhten Ungezieferbefall in diesem Bereich, könnte jedoch auch auf Zufall beruhen. Liegt aber zusätzlich die Anzahl solch nah benachbarter Bekämpfungsorte über einem vorgegebenen Schwellenwert, validiert dies die Hypothese eines Gebietes mit erhöhtem Ungezieferbefall, sodass eine Identifizierung als Hotspot gerechtfertigt ist.

Bei einer weniger rechenintensiven Variante ist dagegen vorgesehen, dass als ein Hotspot ein solcher Bereich des Bekämpfungsgebietes identifiziert wird, der einem Teilbereich einer Zelle eines vorgegebenen Flächenrasters entspricht, in welchem eine effektive Anzahl von Bekämpfungsorten oberhalb eines vorgegebenen Anzahl-Grenzwertes liegt. Bei dieser Variante wird also ein virtuelles Raster über das Bekämpfungsgebiet gelegt und das Bekämpfungsgebiet dadurch in feste, unveränderliche Zellen unterteilt. In jeder dieser Zellen wird anhand der gespeicherten Bekämpfungsorte eine effektive Anzahl von Bekämpfungsorten berechnet und mit einem Anzahl-Grenzwert verglichen. Liegt die effektive Anzahl an Bekämpfungsorten für diese Zelle oberhalb des Anzahl-Grenzwertes, wird die Zelle, insbesondere ihr Mittelpunkt als Hotspot identifiziert.

Bei einer besonders einfachen Ausführungsform dieser Variante wird als effektive Anzahl die absolute Anzahl an Bekämpfungsorten in der Zelle berechnet. Bei einer komplexeren Ausführungsform der Variante ist hingegen vorgesehen, dass die effektive Anzahl von Bekämpfungsorten in einer Zelle einem gewichteten Mittelwert der absoluten Anzahlen von Bekämpfungsorten in dieser Zelle und in den dieser Zelle benachbarten Zellen entspricht. Mit anderen Worten fließen auch die Absolutzahlen von Bekämpfungsorten der Nachbarzellen in die Berechnung der effektiven Anzahl von Bekämpfungsorten ein. Beispielsweise kann bei einem quadratischen Raster die Absolutzahl von Bekämpfungsorten der Zelle selbst mit 40%, die Absolutzahlen von Bekämpfungsorten der über eine Quadratkante benachbarten Zellen mit jeweils 10% und die Absolutzahlen von Bekämpfungsorten jeweils diagonal benachbarten Zellen mit jeweils 5% gewichtet zur effektiven Anzahl von Bekämpfungsorten der Zentralzelle beitragen. Durch die erläuterte Ausführungsform wird vermieden, dass Gebiete erhöhten Ungezieferbefalls, die auf der Grenze zweier Raster-Zellen liegen, unerkannt bleiben.

Wie aus dem Stand der Technik bekannt, sind Schnecken das bevorzugte Zielungeziefer des erfindungsgemäßen Verfahrens. Zu ihrer Detektion können, wie beispielsweise aus dem Stand der Technik bekannt, Bilddetektoren eingesetzt werden, die das Bekämpfungsgebiet in unterschiedlich spektral beleuchteten Zuständen (z.B. im IR- und im sichtbaren Spektralbereich) aufnehmen und Schnecken durch spektral analysierende Bildverarbeitungsverfahren erkennen. Zu ihrer Bekämpfung ist beispielsweise das ebenfalls aus dem Stand der Technik bekannte Absammeln denkbar. Bevorzugt ist jedoch vorgesehen, dass die Bekämpfungsmittel des Roboters eine mechanische Zerstörungsvorrichtung für Schnecken umfassen und das Bekämpfen der Schnecken durch deren mechanische Zerstörung erfolgt. Die mechanische Zerstörung kann beispielsweise durch Schneiden, Hacken, Quetschen etc. erfolgen. In jedem Fall sieht die bevorzugte Ausführungsform ein Töten oder erhebliches Verletzen der Schnecken durch mechanische Einwirkung, hier als mechanische Zerstörung bezeichnet, vor. Die mechanisch zerstörten Schnecken werden bevorzugt am Bekämpfungsort belassen. Diese Verfahrensvariante hat mehrere Vorteile. Zum einen kann das Gewicht des Sammeltanks eingespart werden, was den Roboter energieeffizienter macht. Zum anderen können Fahrten vermieden werden, die allein dem Ausleeren des Sammeltanks dienen, was der Schonung der Pflanzen zugutekommt. Von besonderer Bedeutung ist jedoch, dass durch diese Maßnahme eine natürliche Hotspot-Verstärkung erzielt wird. Dabei wird gezielt die kannibalische Ernährungsweise insbesondere von Acker- und Wegschnecken ausgenutzt. Die mechanisch zerstörten Schnecken, die nach "Abarbeitung" eines Hotspots in diesem mit besonderer Häufigkeit vorliegen, ziehen Artgenossen aus benachbarten Feldbereichen an, die dann bei der nächsten "Abarbeitung" dieses Hotspots bekämpft werden können. Auf diese Weise werden die Schnecken in den erfindungsgemäß verstärkt bearbeiteten Bereichen des Bekämpfungsgebietes, nämlich den Hotspots, konzentriert und aus den ohnehin schwach befallenen und von der erfindungsgemäßen Bewegungsstrategie unberücksichtigten Bereichen des Bekämpfungsgebietes abgezogen.

Das erfindungsgemäße Verfahren ist jedoch nicht auf die Bekämpfung von Schnecken beschränkt. Bei einer weiteren, bevorzugten Variante ist vorgesehen, dass als zu bekämpfendes Zielungeziefer Schadnager, insbesondere Mäuse vorgegeben sind. Da sich Mäuse in ihrer Bewegungsgeschwindigkeit deutlich von Schnecken unterscheiden, ist der Einsatz anderer Detektions- und Bekämpfungsstrategien erforderlich. Zur Bekämpfung von Schadnagern ist daher vorgesehen, dass die Bekämpfungsmittel eine Giftköderablagevorrichtung umfassen und das Bekämpfen der Schadnager durch Ablage von Giftködern in Schadnagertunnel, insbesondere in Eingänge der Schadnagertunnel, erfolgt. Die Bekämpfung erfolgt in diesem Fall also mittelbar und nicht unmittelbar wie im Fall der mechanischen Zerstörung von Schnecken. Die Giftköderablagevorrichtung kann beispielsweise in Form einer Giftweizen-Lanze ausgestaltet sein. Derartige Giftweizen-Lanzen sind dem Fachmann für den manuellen Einsatz bekannt. Die Ablage im von den Schadnagern häufig frequentierten Tunnelbereich erhöht die Wahrscheinlichkeit, dass abgelegte Giftweizenkörner auch tatsächlich gefressen werden. Die Ablage insbesondere im Eingangsbereich der Tunnel ermöglicht eine Überprüfung, ob die Giftköder aufgenommen wurden. Es ist nämlich bei einer Weiterbildung der Erfindung bevorzugt vorgesehen, dass die Detektionsmittel einen Bilddetektor umfassen und eingerichtet sind, durch ein Bildverarbeitungsverfahren Schadnagertunnel, insbesondere Eingänge der Schadnagertunnel zu detektieren. Die Detektion der Schadnager erfolgt somit mittelbar anhand der von ihnen gegrabenen und bewohnten Tunnel. Diese sind unbeweglich und können von dem Bilddetektor des sich langsam bewegenden Roboters problemlos erkannt werden. Bei der oben erwähnten Ablage von Giftködern im Eingangsbereich der Tunnel kann der Detektor zusätzlich dazu verwendet werden, beim nächsten Anfahren eines bereits beköderten Tunnels zu überprüfen, ob der Giftköder noch vorhanden ist oder aufgenommen wurde. Erstgenanntes Prüfungsergebnis kann auf eine erfolgreiche Bekämpfung bei der vorangegangenen "Abarbeitung" des Hotspots schließen lassen und ggf. zu einem Streichen des zugeordneten Bereichs aus der Hotspot-List führen. Letztgenanntes Prüfungsergebnis kann hingegen dahingehend interpretiert werden, dass sich noch aufnahmefähige Schadnager im Hotspot-Bereich befinden. In jedem Fall kann die Information genutzt werden, um die Anzahl ausgelegter Giftköder zu minimieren, was unter Umweltschutzkriterien relevant ist.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: ein schematisches Bewegungsdiagram eines Ungezieferbekämpfungsroboters, der sich gem. einer ersten Ausführungsform des erfindungsgemäßen Verfahrens in einem Bekämpfungsgebiet bewegt und
- Figur 2:: ein schematisches Bewegungsdiagram eines Ungezieferbekämpfungsroboters, der sich gem. einer zweiten Ausführungsform des erfindungsgemäßen Verfahrens in einem Bekämpfungsgebiet bewegt.

### Beschreibung bevorzugter Ausführungsformen

Gleiche Bezugszeichen in den Figuren deuten auf gleiche oder analoge Elemente hin.

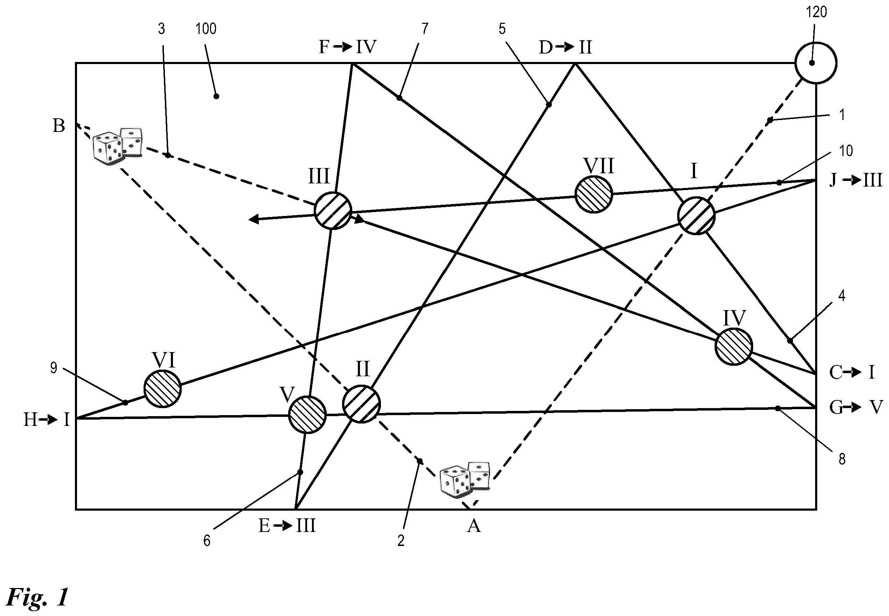

Figur 1 zeigt in stark schematisierter Darstellung den Weg eines nicht im Detail dargestellten Ungezieferbekämpfungsroboters auf einem landwirtschaftlich genutzten Feld, nämlich im Bekämpfungsgebiet 100. Die in Figur 1 illustrierte Situation geht davon aus, dass der Roboter die aktuelle Bekämpfungskampagne ohne besondere Vorinformationen durchführt. Er startet seine Bewegung vom Startpunkt 120 aus und durchläuft zunächst eine Initialisierungsphase, während derer er den gestrichelt dargestellten Weg abfährt. Bei der dargestellten Ausführungsform sei vorgegeben, dass die Initialisierungsphase beendet wird, sobald drei Hotspots identifiziert sind.

Ausgehend vom Startpunkt 120 fährt er zunächst auf dem geradlinigen ersten Wegabschnitt 1. Während seiner Bewegung untersucht er seine im Wirkbereich seiner Detektions- und Bekämpfungsmittel liegende Umgebung auf das Vorhandensein von Zielungeziefer. Im Fall, dass Zielungeziefer identifiziert wird, wird eine entsprechende Bekämpfungsmaßnahme eingeleitet. Im Fall von Schnecken als Zielungeziefer kann insbesondere deren mechanische Zerstörung eingeleitet werden. Im Fall von Schadnagern als Zielungeziefer kann ein Giftköder in einem detektierten Eingangsbereich eines Schadnagertunnels platziert werden. Jeder Bekämpfungsort wird in einer Datenbank gespeichert und fließt in die Berechnung zur Identifizierung von Hotspots und zur Ausarbeitung der Bewegungsstrategie nach Abschluss der Initialisierungsphase ein. Bei der dargestellten Ausführungsform weicht der Roboter dabei nicht von seinem geradlinigen Weg ab. Auf seinem Weg passiert der Roboter zufällig ein Gebiet erhöhten Ungezieferbefalls und identifiziert dies als Hotspot I.

Er setzt seinen geradlinigen Weg so lange fort, bis er am Umschwenkpunkt A den Rand des Bekämpfungsgebietes 100 erreicht. Hier wird durch einen Zufallsgenerator ein zufälliger Umschwenkwinkel festgelegt, wie dies durch die symbolisch dargestellten Würfel am Umschwenkpunkt A angedeutet ist. Der Roboter schwenkt am Umschwenkpunkt A auf den zweiten geradlinigen Wegabschnitt 2 ein.

Auf dem Wegabschnitt 2 passiert er zufällig ein weiteres Gebiet erhöhten Ungezieferbefalls und identifiziert dieses als Hotspot II.

Er setzt seinen geradlinigen Weg weiter fort, bis er am Umschwenkpunkt B erneut an den Rand des Bekämpfungsgebietes 100 gelangt. Dort erfolgt erneut ein zufallsbasiertes Umschwenken. Der Roboter setzt seinen Weg auf dem dritten geradlinigen Wegabschnitt 3 fort.

Auf dem Wegabschnitt 3 passiert der Roboter zufällig ein weiteres Gebiet erhöhten Ungezieferbefalls und identifiziert dieses als Hotspot III.

Zu diesem Zeitpunkt endet vorgabegemäß die Initialisierungsphase, da drei Hotspots I, II, III identifiziert wurden. Der Roboter folgt von nun an einer anderen Bewegungsstrategie, nach der er nur noch identifizierte Hotspots anfährt. Dabei bleibt seine Bewegung jedoch den Bewegungsregeln unterworfen, gem. denen er sich ausschließlich auf geradlinigen Abschnitten jeweils bis zum Rand des Bekämpfungsgebietes 100 bewegt und erst am Gebietsrand auf einen neuen, geradlinigen Wegabschnitt umschwenkt. Außerdem bleibt der Roboter hinsichtlich Detektion und Bekämpfung von Zielungeziefer sowie hinsichtlich der Speicherung von Bekämpfungsorten und der Identifizierung von Hotspots aktiv.

Hinter dem Hotspot III setzt der Roboter daher den dritten Wegabschnitt 3 geradlinig bis zum Umschwenkpunkt C fort. Dabei trifft er zufällig auf ein weiteres Gebiet erhöhten Ungezieferbefalls und identifiziert dieses als Hotspot IV.

Am Umschwenkpunkt C erfolgt die Umschwenkung nicht mehr zufallsbasiert sondern deterministisch. Insbesondere wird gezielt der am längsten nicht mehr angefahrene identifizierte Hotspot angefahren. Es ist dies der Hotspot I. Am Umschwenkpunkt C schwenkt der Roboter somit auf einen vierten geradlinigen Wegabschnitt 4 ein, der den Hotspot I kreuzt und am Umschwenkpunkt D am Rand des Bekämpfungsgebietes 100 endet.

Nach denselben Grundsätzen schwenkt der Roboter am Umschwenkpunkt D auf den fünften geradlinigen Wegabschnitt 5 ein, der zielgerichtet den Hotspot II kreuzt und am Umschwenkpunkt E am Rand des Bekämpfungsgebietes 100 endet.

Am Umschwenkpunkt E schwenkt der Roboter gemäß denselben Regeln auf den sechsten geradlinigen Wegabschnitt 6 ein, der zielgerichtet den Hotspot III kreuzt und am Umschwenkpunkt F am Rand des Bekämpfungsgebietes 100 endet. Vor der Passage des Hotspots III durchfährt der Roboter jedoch zufällig ein weiteres Gebiet erhöhten Ungezieferbefalls und identifiziert dieses als Hotspot V.

Am Umschwenkpunkt F schwenkt der Roboter nach erneut denselben Regeln auf den siebten geradlinigen Wegabschnitt 7 ein, wobei nun der Hotspot IV, d.h. der erste nach der Initialisierungsphase identifizierte Hotspot, der am längsten nicht mehr angefahrene Hotspot ist und daher als aktuelles Bewegungsziel vorgegeben wird. Der siebte geradlinige Wegabschnitt 7 kreuzt also zielgerichtet den Hotspot IV und endet am Umschwenkpunkt G am Rand des Bekämpfungsgebietes 100.

Nunmehr ist Hotspot V der am längsten nicht mehr angefahrene Hotspot, der folglich als aktuelles Bewegungsziel vorgegeben wird. Am Umschwenkpunkt G schwenkt der Roboter somit auf den achten geradlinigen Bewegungsabschnitt 8 ein, der den Hotspot V zielgerichtet kreuzt und am Umschwenkpunkt H am Rand des Bekämpfungsgebietes 100 endet. Bei der dargestellten Ausführungsform liegt der Hotspot II, d.h. der zweite während der Initialisierungsphase identifizierte Hotspot, allerdings ebenfalls auf dem achten geradlinigen Wegabschnitt 8 und wird vom Roboter zwangsläufig passiert. Hotspot II rutscht dadurch nach ganz hinten in der Reihenfolge der gezielt anzufahrenden Hotspots.

Am Umschwenkpunkt H ist der Hotspot I erneut der am längsten nicht angefahrene Hotspot, sodass der Roboter auf den neunten geradlinigen Wegabschnitt 9 einschwenkt, der den Hotspot I kreuzt und am Umschwenkpunkt J am Rand des Bekämpfungsgebietes 100 endet. Auf dem neunten geradlinigen Wegabschnitt 9 passiert der Roboter zufällig ein weiteres Gebiet erhöhten Ungezieferbefalls und identifiziert dieses als Hotspot VI.

Am Umschwenkpunkt J, der am Ende des neunten Wegabschnitts 9 liegt und aufgrund der gezielten Ansteuerung von Hotspot I als am der bis dato längsten nicht mehr angefahrener Hotspot erreicht wird, ist nicht etwa Hotspot II der nunmehr am längsten nicht mehr angefahrene Hotspot. Vielmehr wurde er ja zwangsläufig auf dem achten geradlinigen Wegabschnitt 8 auf dem Weg zum seinerzeitigen Bewegungsziel, Hotspot V, angefahren. Daher ist am Umschwenkpunkt J nun Hotspot III der am längsten nicht mehr angefahrene Hotspot, der deshalb als neues Bewegungsziel vorgegeben wird. Der Roboter schwenkt somit auf den zehnten geradlinigen Wegabschnitt 10 ein, der Hotspot III zielgerichtet kreuzt. Auf seinem Weg dorthin passiert der Roboter zufällig ein weiteres Gebiet erhöhten Ungezieferbefalls und identifiziert dieses als Hotspot VII.

Der Fachmann wird auf Basis der obigen Erläuterungen die weitere Bewegung des Roboters entsprechend der erfindungsgemäßen Bewegungsstrategie fortsetzen können. Es sollte deutlich geworden sein, dass durch die ständige Aktualisierung einerseits der Liste identifizierter Hotspots und andererseits der Reihenfolge, in welcher die identifizierten Hotspots als Bewegungsziele vorzugeben und anzufahren sind, eine sehr gründliche und effiziente Ungezieferbekämpfung im gesamten Bekämpfungsgebiet 100 erreicht wird.

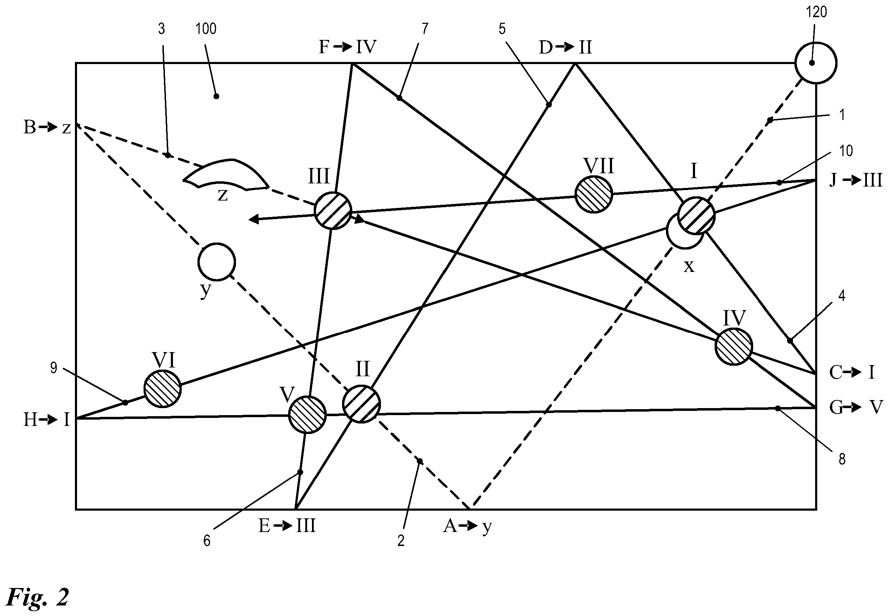

Figur 2 zeigt den Weg, den der Roboter auf dem gleichen Bekämpfungsgebiet 100 unter Nutzung einer anderen Bewegungsstrategie während der Initialisierungsphase nehmen würde. Es sei angenommen, dass die Gebiete erhöhten Ungezieferbefalls an denselben Positionen wie im Fall der Figur 1 liegen. Im Unterschied zu diesem Fall seien jedoch als Vorinformation drei vorläufige Bewegungsziele x, y, z definiert. Bei den vorläufigen Bewegungszielen x und y handele es sich um Positionen von Hotspots, die während einer vorjährigen Bekämpfungskampagne identifiziert wurden. Beim vorläufigen Bewegungsziel z handele es sich um ein aus anderen Gründen interessantes Gebiet, beispielsweise eine geologische Besonderheit, wie etwa ein Tonkopf im Feld, oder ein Gebiet, dass auf Basis von Precision-Farming-Daten, z.B. ein Gebiet besonders geringen Ernteertrags, von Interesse ist. Im Unterschied zur Variante von Figur 1 erfolgt die Wahl der Bewegungsrichtung im Fall von Figur 2 auch während der Initialisierungsphase nicht zufallsbasiert, sondern deterministisch, wobei vorgegeben wurde, die vorläufigen Bewegungsziele x, y, z in dieser Reihenfolge anzufahren. Als weitere Vorgabe sei vorgesehen, dass die Initialisierungsphase ende, sobald sämtliche vorläufigen Bewegungsziele x, y, z angefahren sind und eine Mindestanzahl von drei Hotspots identifiziert ist.

Diese Bedingung ist am identifizierten Hotspot III erfüllt. Bei dem in Figur 2 konstruierten Fall befindet sich nämlich der Hotspot I in der Nähe des vorjährigen Hotspots x, Hotspot II wird zufällig getroffen, im Bereich des vorjährigen Hotspots y wird kein Gebiet aktuell erhöhten Ungezieferbefalls angetroffen und daher kein Hotspot identifiziert und in unmittelbarer Nachbarschaft zu dem dritten vorläufigen Bewegungsziel z wird Hotspot III identifiziert.

Bezüglich der weiteren Bewegung des Roboters in der deterministischen Bewegungsphase kann sinngemäß auf das oben zum Fall von Figur 1 gesagte verwiesen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: erster geradliniger Wegabschnitt
- 2: zweiter geradliniger Wegabschnitt
- 3: dritter geradliniger Wegabschnitt
- 4: vierter geradliniger Wegabschnitt
- 5: fünfter geradliniger Wegabschnitt
- 6: sechster geradliniger Wegabschnitt
- 7: siebter geradliniger Wegabschnitt
- 8: achter geradliniger Wegabschnitt
- 9: neunter geradliniger Wegabschnitt
- 10: zehnter geradliniger Wegabschnitt
- 100: Bekämpfungsgebiet
- 120: Startpunkt
- I - VII: Hotspots
- A - J: Umschwenkpunkte
- x, y, z: vorläufige Bewegungsziele

## Patentansprüche

1. Verfahren zum Betrieb eines Roboters zur Ungezieferbekämpfung in einem vorgegebenen Bekämpfungsgebiet (100), wobei der Roboter
- Bewegungsmittel, mittels derer er in der Lage ist, sich im Bekämpfungsgebiet zu bewegen,
- Detektionssmittel zum wenigstens mittelbaren Detektieren von zu bekämpfendem Zielungeziefer,
- Bekämpfungsmittel zum Bekämpfen identifizierten Zielungeziefers,
- Ortungsmittel zur Ortung seiner jeweils aktuellen Position im Bekämpfungsgebiet (100) und
- Steuermittel, die eingerichtet sind, die Bewegungsmittel, die Detektionsmittel die Bekämpfungsmittel und die Ortungsmittel zu steuern,
aufweist,
und wobei der Roboter von seinen Steuermitteln angesteuert wird, sich nach vorgegebenen Bewegungsregeln im Bekämpfungsgebiet (100) zu bewegen und auf seinem Weg durch das Bekämpfungsgebiet (100) wenigstens mittelbar angetroffenes Zielungeziefer zu detektieren und unverzüglich zu bekämpfen, **dadurch gekennzeichnet,**
**dass** die Steuermittel jeden Ort, an dem eine tatsächliche Bekämpfungsmaßnahme stattgefunden hat, als Bekämpfungsort in einem Datenspeicher speichern, daraus kontinuierlich Bereiche des Bekämpfungsgebietes mit erhöhter Bekämpfungsortdichte als Hotspots (I-VII) identifizieren und spätestens nach Ablauf einer Initialisierungsphase ausschließlich die identifizierten Hotspots (I-VII) als Bewegungsziele der nach den vorgegebenen Bewegungsregeln durchzuführenden Bewegung des Roboters im Bekämpfungsgebiet (100) vorgeben.

2. Verfahren nach Anspruch 1,
**dadurch gekennzeichnet,**
**dass** als jeweils nächstes anzufahrendes Bewegungsziel der am längsten nicht angefahrene Hotspot (I-VII) vorgegeben wird.

3. Verfahren nach einem der vorangehenden Ansprüche,
**dadurch gekennzeichnet,**
**dass** die vorgegebenen Bewegungsregeln jeweils eine geradlinige Fortsetzung der aktuellen Bewegung bis zum Erreichen eines Randes des Bekämpfungsgebietes (100) und ein dortiges Umschwenken auf eine neue, geradlinige und das nächste vorgegebene Bewegungsziel (I-VII; x, y, z) kreuzende Bewegung vorschreiben.

4. Verfahren nach einem der vorangehenden Ansprüche,
**dadurch gekennzeichnet,**
**dass** während der Initialisierungsphase die vorgegebenen Bewegungsregeln jeweils eine geradlinige Fortsetzung der aktuellen Bewegung bis zum Erreichen eines Randes des Bekämpfungsgebietes (100) und ein dortiges Umschwenken auf eine neue, zufällige ausgewählte, geradlinige Bewegung vorschreiben.

5. Verfahren nach einem der vorangehenden Ansprüche,
**dadurch gekennzeichnet,**
**dass** die Initialisierungsphase abgeschlossen wird, sobald eine Mehrzahl von als vorläufige Bewegungsziele (x, y, z) vorgegebenen Bewegungszielen angefahren und eine vorgegebene Anzahl von Hotspots (I-III) identifiziert wurden.

6. Verfahren nach einem der vorangehenden Ansprüche,
**dadurch gekennzeichnet,**
**dass** als ein Hotspot (I-VII) ein solcher Bereich des Bekämpfungsgebietes (100) identifiziert wird,
in dem eine oberhalb eines Anzahl-Grenzwertes liegende Mehrzahl von Abständen zwischen je zwei benachbarten Bekämpfungsorten unterhalb eines vorgegebenen Abstand-Grenzwertes liegt.

7. Verfahren nach einem der Ansprüche 1 bis 5,
**dadurch gekennzeichnet,**
**dass** als ein Hotspot (I-VII) ein solcher Bereich des Bekämpfungsgebietes (100) identifiziert wird, der einem Teilbereich einer Zelle eines vorgegebenen Flächenrasters entspricht, in welchem eine effektive Anzahl von Bekämpfungsorten oberhalb eines vorgegebenen Anzahl-Grenzwertes liegt.

8. Verfahren nach Anspruch 7,
**dadurch gekennzeichnet,**
**dass** die effektive Anzahl von Bekämpfungsorten in einer Zelle der absoluten Anzahl von Bekämpfungsorten in dieser Zelle entspricht.

9. Verfahren nach Anspruch 7,
**dadurch gekennzeichnet,**
**dass** die effektive Anzahl von Bekämpfungsorten in einer Zelle einem gewichteten Mittelwert der absoluten Anzahlen von Bekämpfungsorten in dieser Zelle und in den dieser Zelle benachbarten Zellen entspricht.

10. Verfahren nach einem der vorangehenden Ansprüche,
**dadurch gekennzeichnet,**
**dass** als zu bekämpfendes Zielungeziefer Schnecken vorgegeben sind.

11. Verfahren nach Anspruch 10,
**dadurch gekennzeichnet,**
**dass** die Bekämpfungsmitteln eine mechanische Zerstörungsvorrichtung für Schnecken umfassen und das Bekämpfen der Schnecken durch deren mechanische Zerstörung erfolgt.

12. Verfahren nach einem der Ansprüche 10 bis 11,
**dadurch gekennzeichnet,**
**dass** bekämpfte Schnecken am Bekämpfungsort belassen werden.

13. Verfahren nach einem der Ansprüche 1 bis 9,
**dadurch gekennzeichnet,**
**dass** als zu bekämpfendes Zielungeziefer Schadnager vorgegeben sind.

14. Verfahren nach Anspruch 13,
**dadurch gekennzeichnet,**
**dass** die Bekämpfungsmittel eine Giftköderablagevorrichtung umfassen und das Bekämpfen der Schadnager durch Ablage von Giftködern in Schadnagertunnel, insbesondere in Eingängen der Schadnagertunnel, erfolgt.

15. Verfahren nach einem der Ansprüche 13 bis 14,
**dadurch gekennzeichnet,**
**dass** die Detektionsmittel einen Bilddetektor umfassen und eingerichtet sind, durch ein Bildverarbeitungsverfahren Schadnagertunnel, insbesondere Eingänge der Schadnagertunnel, zu detektieren.

## Claims

1. A method for controlling a robot for exterminating pests in a predetermined extermination region (100), the robot having
- moving means by which it is able to move in the extermination region,
- detecting means for at least indirectly detecting target pests to be exterminated,
- extermination means for exterminating identified target pests,
- locating means for locating at any time its current position in the extermination region (100) and
- control means configured to control the moving means, the detecting means the extermination means and the locating means,
and wherein the robot is controlled by its control means to move in the extermination region (100) according to predetermined movement rules and to detect and immediately exterminate target pests at least indirectly encountered on its path through the extermination region (100),
**characterized in that**
the control means store each location at which an actual extermination measure has taken place as a extermination location in a data memory, continuously identify therefrom areas of the extermination region with an increased density of extermination locations as hotspots (I-VII) and, at the latest after the end of an initialization phase, specify exclusively the identified hotspots (I-VII) as movement targets of the movement of the robot in the extermination region (100) to be carried out according to the predetermined movement rules.

2. The method according to claim 1,
**characterized in that**
the next movement target to be approached in each case is the hotspot (I-VII) which has not been approached for the longest time.

3. The method according to either of the preceding claims,
**characterized in that**
the predetermined movement rules in each case prescribe a rectilinear continuation of the current movement until an edge of the extermination region (100) is reached, and, at that location, a change of direction to a new, rectilinear movement which intersects the next predetermined movement target (I-VII; x, y, z).

4. The method according to any of the preceding claims,
**characterized in that**
during the initialization phase, the predetermined movement rules in each case prescribe a rectilinear continuation of the current movement until an edge of the extermination region (100) is reached, and, at that location, a change of direction to a new, randomly selected, rectilinear movement.

5. The method according to any of the preceding claims,
**characterized in that**
the initialization phase is completed as soon as a plurality of movement targets predetermined as preliminary movement targets (x, y, z) have been approached and a predetermined number of hotspots (I-III) have been identified.

6. The method according to any of the preceding claims,
**characterized in that**
a hotspot (I-VII) is identified as such an area of the extermination region (100) in which a plurality of distances, each between two adjacent control locations, are below a predetermined distance threshold, said plurality being greater than a given a number threshold.

7. The method according to any of claims 1 to 5,
**characterized in that**
a hotspot (I-VII) is identified as an area of the extermination region (100) which corresponds to a subarea of a cell of a predetermined area grid in which an effective number of extermination locations lies above a predetermined number threshold.

8. The method according to claim 7,
**characterized in that**
the effective number of extermination locations in a cell corresponds to the absolute number of extermination locations **in that** cell.

9. The method according to claim 7,
**characterized in that**
the effective number of extermination locations in a cell corresponds to a weighted average of the absolute numbers of extermination locations **in that** cell and in the cells adjacent to that cell.

10. The method according to any of the preceding claims,
**characterized in that**
the target pests to be exterminated are snails.

11. The method according to claim 10,
**characterized in that**
the extermination means comprise a mechanical destruction apparatus for snails and the extermination of the snails is effected by the mechanical destruction of the snails.

12. The method according to any of claims 10 to 11,
**characterized in that**
exterminated snails are left at the extermination location.

13. The method according to any of claims 1 to 9,
**characterized in that**
the target pests to be exterminated are rodents.

14. The method according to claim 13,
**characterized in that**
the controlling means comprise an apparatus for depositing poisonous bait and the extermination of the rodents is carried out by depositing poisonous bait in rodent tunnels, in particular in entrances to the rodent tunnels.

15. The method according to any of claims 13 to 14,
**characterized in that**
the detecting means comprise an image detector and are configured to detect rodent tunnels, in particular entrances to rodent tunnels, by means of an image processing method.

## Revendications

1. Procédé permettant de faire fonctionner un robot utilisé pour la lutte contre les parasites dans une zone de lutte (100) prédéfinie, ledit robot présentant
- des moyens de déplacement lui permettant de se déplacer dans la zone de lutte,
- des moyens de détection destinés à la détection au moins indirecte de parasites visés à combattre,
- des moyens de lutte destinés à lutter contre les parasites visés identifiés,
- des moyens de localisation destinés à localiser sa position actuelle dans la zone de lutte (100) et
- des moyens de commande conçus pour commander les moyens de déplacement, les moyens de détection, les moyens de lutte et les moyens de localisation,
et ledit robot étant commandé par ses moyens de commande de manière à se déplacer dans la zone de lutte (100) selon les règles de mouvement prédéfinies et de manière à détecter sur son chemin à travers la zone de lutte (100) des parasites visés rencontrés au moins indirectement et à les combattre immédiatement,
**caractérisé en ce**
**que** les moyens de commande enregistrent dans une mémoire chaque endroit où s'est déroulée une mesure de lutte effective en tant que lieu de lutte, identifient, sur cette base, en continu des aires de la zone de lutte à densité de lieu de lutte élevée comme des zones critiques (I-VII) et prédéfinissent ensuite, à l'expiration d'une phase d'initialisation, seulement les zones critiques (I-VII) identifiées en tant que cibles de mouvement pour le déplacement du robot à effectuer selon les règles de mouvement prédéfinis dans la zone de lutte (100).

2. Procédé selon la revendication 1,
**caractérisé en ce**
**que** la zone critique (I-VII) non parcourue depuis longtemps est prédéfinie comme la prochaine cible de mouvement à parcourir.

3. Procédé selon l'une des revendications précédentes,
**caractérisé en ce**
**que** les règles de mouvement prédéfinies imposent à chaque fois un prolongement rectiligne du déplacement actuel jusqu'à ce qu'un bord de la zone de lutte (100) soit atteint et un revirement vers un nouveau mouvement rectiligne, croisant la prochaine cible de mouvement (I-VII ; x, y, z) prédéfinie.

4. Procédé selon l'une des revendications précédentes,
**caractérisé en ce**
**que**, pendant la phase d'initialisation, les règles de mouvement prédéfinies imposent à chaque fois un prolongement rectiligne du déplacement actuel jusqu'à ce qu'un bord de la zone de lutte (100) soit atteint et un revirement vers un nouveau mouvement rectiligne, choisi au hasard.

5. Procédé selon l'une des revendications précédentes,
**caractérisé en ce**
**que** la phase d'initialisation est terminée dès qu'une pluralité de cibles de mouvement prédéfinies en tant que cibles de mouvement provisoires (x, y, z) est parcourue et un nombre prédéfini de zones critiques (I-III) est identifié.

6. Procédé selon l'une des revendications précédentes,
**caractérisé en ce**
**qu'**une aire de la zone de lutte (100) identifiée en tant que zone critique est une aire dans laquelle une pluralité de distances, chacune entre deux lieux de lutte adjacents, sont inférieures à une distance limite prédéfinie, ladite pluralité étant supérieure à un nombre limite.

7. Procédé selon l'une des revendications 1 à 5,
**caractérisé en ce**
**qu'**une aire de la zone de lutte (100) identifiée en tant que zone critique (I-VII) est celle qui correspond à une zone partielle d'une cellule d'une grille de surface, où un nombre effectif de lieux de lutte est supérieur à un nombre limite prédéfini.

8. Procédé selon la revendication 7,
**caractérisé en ce**
**que** le nombre effectif de lieux de lutte dans une cellule correspond au nombre absolu de lieux de lutte dans cette cellule.

9. Procédé selon la revendication 7,
**caractérisé en ce**
**que** le nombre effectif de lieux de lutte dans une cellule correspond à une valeur moyenne pondérée des nombres absolus de lieux de lutte dans cette cellule et dans les cellules adjacentes à cette cellule.

10. Procédé selon l'une des revendications précédentes,
**caractérisé en ce**
**que** des gastéropodes sont prédéfinis en tant que parasites visés à combattre.

11. Procédé selon la revendication 10,
**caractérisé en ce**
**que** les moyens de lutte comprennent un dispositif de destruction mécanique des gastéropodes et la lutte contre les gastéropodes se fait par la destruction mécanique de ceux-ci.

12. Procédé selon l'une des revendications 10 à 11,
**caractérisé en ce**
**que** les gastéropodes tués sont laissés sur le lieu de lutte.

13. Procédé selon l'une des revendications 1 à 9,
**caractérisé en ce**
**que** des rongeurs sont prédéfinis en tant que parasites visés à combattre.

14. Procédé selon la revendication 13,
**caractérisé en ce**
**que** les moyens de lutte comprennent un dispositif de dépôt d'appâts empoisonnés et la lutte contre les rongeurs se fait grâce au dépôt d'appâts empoisonnés dans des tunnels de rongeurs, notamment aux entrées des tunnels de rongeurs.

15. Procédé selon l'une des revendications 13 à 14,
**caractérisé en ce**
**que** les moyens de détection comprennent un détecteur d'image et sont configurés de manière à détecter des tunnels de rongeurs, notamment les entrées des tunnels de rongeurs, par un procédé de traitement d'images.
